# EUROPÄISCHE PATENTSCHRIFT

(11) **EP 0 432 673 B1**
(45) Veröffentlichungstag und Bekanntmachung des Hinweises auf die Patenterteilung: **23.08.1995**
(21) Anmeldenummer: 90123634.9
(22) Anmeldetag: 08.12.1990
(51) Int. Cl.: A01M 7/00

(54) **Fahrbare Vorrichtung zum Herstellen einer insbesondere zum Versprühen bestimmten, aus Wasser und mindestens einem flüssigen Wirkstoff bestehenden Lösung**
Mobile apparatus for producing active water-based solutions
Dispositif mobile pour produire des mélanges actifs sur base de l'eau

(30) Priorität: 12.12.1989 DE 8914599 U; 09.10.1990 DE 9014034 U
(43) Veröffentlichungstag der Anmeldung: 19.06.1991
(73) Patentinhaber: Schönleber, Heinz, D-93186 Pettendorf (DE)
(72) Erfinder: Schönleber, Heinz, D-93186 Pettendorf (DE)
(74) Vertreter: Tetzner, Volkmar, Dr.-Ing. Dr. jur.

(56) Entgegenhaltungen:
- EP-A- 0 223 224
- EP-A- 0 323 205
- WO-A-89/10050
- FR-A- 1 501 922
- FR-A- 2 148 823
- GB-A- 1 407 588
- NL-A- 7 607 981
- US-A- 1 967 799
- TRANSACTIONS OF THE AM. SOC. OF AGRICULTURAL ENG. Bd. 29, Nr. 4, 1986, ST. JOSEPH, MICHIGAN, USA Seiten 1065 - 1069; D.E. GROSELLE ET AL.: 'EFFECTS OF INJECTION PARAMETERS ON THE DROPLET SIZE OF AN OIL FORMULATED INSECTICIDE DURING CHEMIGATION'

## Beschreibung

Die Erfindung bezieht sich auf eine fahrbare Vorrichtung zum Herstellen einer insbesondere zum Versprühen bestimmten, aus Wasser und mindestens einem flüssigen Wirkstoff bestehenden Lösung gemäß dem Oberbegriff des Anspruchs 1.

Die Herstellung einer aus Wasser und mindestens einem flüssigen Wirkstoff bestehenden Lösung spielt beispielsweise in der Landwirtschaft beim Versprühen von Pflanzenschutzmitteln eine wichtige Rolle. Um einerseits einen gewünschten Erfolg durch das Ausbringen von Pflanzenschutzmitteln zu erzielen und um andererseits die zu besprühenden Pflanzen sowie Boden und Grundwasser nicht mehr als unbedingt notwendig mit Giften zu belasten, muß die zu versprühende Lösung ein genau vorgeschriebenes Mischungsverhältnis zwischen Wasser und flüssigem Wirkstoff aufweisen.

Da das Schadbild auf einem Acker meist sehr verschieden ist, muß obendrein an bestimmten Stellen mit Lösungen unterschiedlicher Konzentration gearbeitet werden oder es müssen der Lösung zusätzliche Wirkstoffe beigemischt werden.

Die genaue Einhaltung des Mischungsverhältnisses wird üblicherweise dadurch erreicht, daß vor dem Versprühen der Lösung eine ausreichend große Menge an Lösung in einem Tank hergestellt wird, indem man eine bestimmte Menge an Wasser mit einer entsprechenden Menge an flüssigem Wirkstoff vermischt. Auf diese Weise läßt sich zwar eine Lösung unter genauer Einhaltung eines vorbestimmten Mischungsverhältnisses herstellen, doch weist dieses Verfahren den Nachteil auf, daß einerseits die Herstellung der Lösung eine umständliche und langwierige Angelegenheit ist und daß andererseits bereits beim Mischen der Lösung genau die benötigte Menge an Lösung bekannt sein muß. In der Regel stimmt aber die gemischte Lösungsmenge mit der zum Versprühen tatsächlich benötigten Lösungsmenge nicht genau überein, so daß entweder erneut eine Lösung angesetzt werden muß oder aber die zuviel angesetzte Lösung auf geeignete Weise unter Inkaufnahme einer unnötigen Umweltbelastung beseitigt werden muß. Zudem ist das Versprühen von Lösungen mit wechselnden Konzentrationen oder Zusammensetzungen auf diese Weise praktisch nicht durchführbar.

Aus diesem Grund wurde eine Vorrichtung vorgeschlagen, bei der die zu versprühende Lösung automatisch unmittelbar während des Sprühvorgangs selbst hergestellt wird. Diese Vorrichtung weist einen Mischbehälter auf, dem entsprechend dem momentanen Lösungsbedarf kontinuierlich Wasser zugeführt wird. Bevor das Wasser den Mischbehälter erreicht, treibt es eine Hyraulik-Kolbenpumpe an, die dabei den flüssigen Wirkstoff aus einem Wirkstoffbehälter ansaugt und in den Mischbehälter pumpt. Die zeitlich nicht kontinuierliche Zuführung von flüssigem Wirkstoff in den Mischbehälter bewirkt jedoch eine schwankende Konzentration der zu versprühenden Lösung.

Aus der NL-A-760 7981 ist eine fahrbare Vorrichtung zum Herstellen einer insbesondere zum Versprühen bestimmten, aus Wasser und mindestens einem flüssigen Wirkstoff bestehenden Lösung entsprechend dem Oberbegriff des Anspruches 1 bekannt.

Der Erfindung liegt die Aufgabe zugrunde, eine Vorrichtung gemäß dem Oberbegriff des Anspruches 1 derart weiterzubilden, daß auf einfache Weise eine nur dem augenblicklichen Bedarf entsprechende Menge an Lösung mit gleichbleibender Konzentration herstellbar ist.

Diese Aufgabe wird erfindungsgemäß durch die kennzeichnenden Merkmale des Anspruches 1 gelöst.

Die Erfindung wird im folgenden anhand von Ausführungsbeispielen unter Bezugnahme auf die Zeichnung näher erläutert. Es zeigen:
Fig. 1 eine Vorrichtung zum Herstellen einer zum Versprühen bestimmten, aus Wasser und einem flüssigen Wirkstoff bestehenden Lösung, und
Fig. 2 eine andere Ausführungsform eines in Fig. 1 gezeigten Mischbehälters.

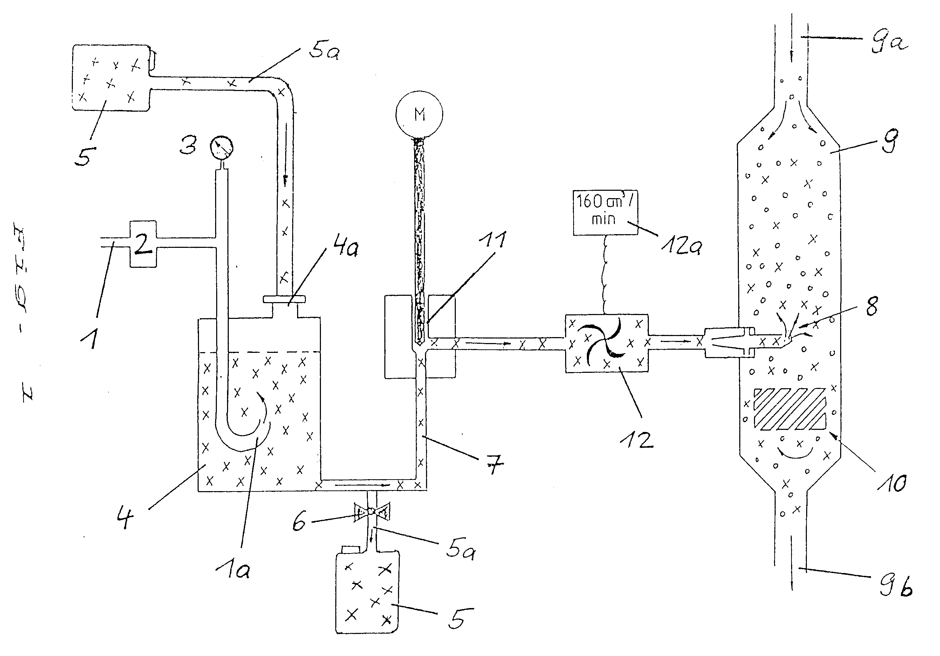

Die in Fig. 1 gezeigte und im folgenden näher beschriebene Vorrichtung ist Teil einer fahrbaren Sprühvorrichtung mit einem Wassertank, wie beispielsweise einer fahrbaren Pflanzenschutzspritze, die von einer Zugmaschine gezogen wird und dabei eine Pflanzenschutzmittel-Lösung versprüht.

Wie in Fig. 1 gezeigt ist, enthält ein Wirkstoffbehälter 4 einen flüssigen Wirkstoff X. Eine Einfüllschleuse 4a des Wirkstoffbehälters 4 ist durch einen nicht gezeigten Verschlußdeckel luftdicht verschließbar. Eine von außen ins Innere des Wirkstoffbehälters 4 ragende Druckluftzuleitung 1 weist an Ihrem Ende eine Düse 1a auf. Außerhalb des Wirkstoffbehälters 4 sind an der Druckluftzuleitung 1 ein einstellbares Druckminderventil 2 und eine Luftdruck-Anzeigevorrichtung 3 mit gegebenenfalls einem Druckbegrenzungsventil vorgesehen.

Der Wirkstoffbehälter 4 ist über eine Wirkstoffleitung 7 mit einem zylinderförmigen Mischbehälter 9 verbunden.

Der Mischbehälter 9 weist neben der mit der Wirkstoffleitung 7 verbundenen Winkeldüse 8 zum Zuführen des flüssigen Wirkstoffs X eine Wasserzuführöffnung 9a zum Zuführen von Wasser O aus dem nicht dargestellten Wassertank und eine Abgabeöffnung 9b zur Abgabe der aus dem Wasser und dem flüssigen Wirkstorf gebildeten Lösung auf. Im Inneren dem Mischbehälters 9 befindet sich mit Abstand zur Mischbehälterwand stromab der Winkeldüse 8 ein zylinderförmiger Staukörper 10, der an seiner Außenfläche Schrägschlitze aufweist.

An der Wirkstoffleitung 7 sind ein durch einen Stellmotor in Form eines Elektromotors M verstellbares Durchflußmengen-Steuerventil in Form eines Nadelventils 11 und ein Durchflußmengenmesser 12 mit einer Anzeigevorrichtung 12a vorgesehen.

An der Einfüllschleuse 4a des Wirkstoffbehälters 4 ist nach Abnahme des nicht gezeigten Verschlußdeckels ein mit einem Vorratstank 5 verbundener Tankschlauch 5a anbringbar.

Die Wirkstoffleitung 7 weist in der Nähe des Wirkstoffbehälters 4 einen nach unten ragenden Entleerungsstutzen 7a mit einem Absperrhahn 6 auf. An den Entleerungsstutzen 7a ist nach dem Absperrhahn 6 der mit dem Vorratstank 5 verbundene Tankschlauch 5a anbringbar.

Die Herstellung einer aus dem Wasser O und dem flüssigen Wirkstoff X bestehenden Lösung erfolgt im Mischbehälter 9. Der flüssige Wirkstoff X gelangt vom Wirkstoffbehälter 4 über die Wirkstoffleitung 7 und die Winkeldüse 8 in den Mischbehälter 9. Die Winkeldüse bewirkt, daß der flüssige Wirkstoff X fächerförmig derart in das Innere des Mischbehälters 9 eingebracht wird, daß sich über dem gesamten Querschnitt des Mischbehälters 9 eine weitgehend gleichmäßige Einspeisung des flüssigen Wirkstoffs ergibt. Damit wird erreicht, daß sich der flüssige Wirkstoff gleichmäßig mit dem über die Wasserzuführöffnung 9a eingeleiteten Wasser im Quer- und Gegenstrom vermischen kann. Zur zusätzlichen Vermischung werden die vermischten Flüssigkeiten auf ihrem Weg zur Abgabeöffnung 9b seitlich am Staukörper 10 vorbeigeleitet, wobei sie in eine eine gleichmäßige Vermischung bewirkende Drehbewegung versetzt werden. Die den Mischbehälter 9 über die Abgabeöffnung 9b verlassende Lösung weist somit eine äußerst gleichmäßige Konzentration auf.

Der flüssige Wirkstoff wird mittels Druckluft aus dem Wirkstoffbehälter 4 befördert. Zu diesem Zweck wird über die Druckluftzuleitung 1 beispielsweise von einer Druckluftanlage einer Zugmaschine oder einer separaten Luftdruckgewinnungsanlage Druckluft in den Wirkstoffbehälter 4 geleitet. Die Düse 1a verleiht der Druckluftzuleitung 1 eine Funktion als Mischrohr und bewirkt, daß der im Wirkstoffbehälter 4 befindliche flüssige Wirkstoff durch die kreisförmig eingeleitete Druckluft ständig aufgemischt wird. Durch das Druckminderventil 2 in der Druckluftzuleitung 1 ist der Druck innerhalb des Wirkstoffbehälters 4 auf einen vorbestimmten Wert einstellbar, so daß auf diese Weise die pro Zeiteinheit zum Mischbehälter 9 transportierte Menge an flüssigem Wirkstoff konstant gehalten werden kann. Falls der Druck innerhalb des Wirkstoffbehälters 4 einen vorbestimmten Wert überschreitet, kann der Überdruck durch das Begrenzungsventil an der Luftdruck-Anzeigevorrichtung 3 nach außen abgeleitet werden.

Die durch die Wirkstoffleitung 7 zum Mischbehälter 9 transportierte Menge an flüssigem Wirkstoff X wird durch das mittels des Elektromotors M verstellbare Durchflußmengen-Steuerventil 11 eingestellt. Mit Hilfe des Durchflußmengenmessers 12 wird die pro Zeiteinheit transportierte Menge an flüssigem Wirkstoff gemessen. Die Messung der Durchflußmenge erfolgt dabei durch Zählen von Magnetimpulsen, die durch ein Flügelrad erzeugt werden, das durch den vorbeiströmenden flüssigen Wirkstoff entsprechend der Durchflußmenge in eine Drehbewegung versetzt wird.

Die durch den Durchflußmengenmesser 12 gemessene Durchflußmenge wird von der Anzeigevorrichtung 12a angezeigt. Eine Bedienungsperson ist damit in der Lage, durch gezieltes Betätigen des Stellmotors M das Durchflußmengen-Steuerventil 11 derart zu verstellen, daß die pro Zeiteinheit zum Mischbehälter 9 transportierte Menge an flüssigem Wirkstoff einen gewünschten Wert annimmt.

Die durch den Durchflußmengenzähler 12 gemessene Durchflußmenge kann jedoch auch unmittelbar für eine automatische Regelung der Durchflußmenge verwendet werden. Zu diesem Zweck ist eine nicht gezeigte Regeleinrichtung beispielsweise in Form eines Bordcomputers vorgesehen, die mit dem Elektromotor M zur Einstellung des Durchflußmengen-Steuerventils 11 und dem Durchflußmengenmesser 12 verbunden ist und eine Eingabevorrichtung, wie beispielsweise eine Tastatur, zur Eingabe des Wertes einer pro Zeiteinheit gewünschten Durchflußmenge aufweist. Auf diese Weise kann automatisch in Abhängigkeit vom gemessenen Durchflußwert das Durchflußmengen-Steuerventil 11 über dem Elektromotor M derart eingestellt werden, daß der über die Eingabevorrichtung eingegebene gewünschte Durchflußmengenwert ständig genau eingehalten wird.

Die Regeleinrichtung kann zusätzlich mit dem Druckminderventil 2 verbunden sein, um bei Bedarf durch Verstellung dieses Ventils auch den für den Transport des flüssigen Wirkstoffs zum Mischbehälter 9 verantwortlichen Druck im Wirkstoffbehälter 4 einstellen zu können.

Durch die Regeleinrichtung kann erreicht werden, daß pro Zeiteinheit eine konstante Menge an flüssigem Wirkstoff zum Mischbehälter 9 transportiert wird. Unter der Voraussetzung, daß das Wasser aus dem Wassertank ebenfalls mit einer pro Zeiteinheit konstanten Menge in den Mischbehälter gelangt, ist eine aus Wasser und flüssigem Wirkstoff bestehende Lösung mit zeitlich äußerst konstantem Mischverhältnis herstellbar. Bei konstanter Fahrgeschwindigkeit der Sprühvorrichtung ergibt sich damit eine konstante Menge der pro Flächeneinheit versprühten Lösung.

Wenn der Regeleinrichtung zusätzlich ein Signal zugeführt wird, das die pro Zeiteinheit in den Mischbehälter gelangende Wassermenge angibt, kann die Regeleinrichtung auch so ausgebildet sein, daß an ihr nicht die zum Mischbehälter zu transportierende Menge an flüssigem Wirkstoff eingegeben werden muß, sondern ein gewünschtes Mischungsverhältnis der Lösung.

Wenn die dem Mischbehälter zugeführte Menge an Wasser von der Fahrgeschwindigkeit beispielsweise einer von einer Zugmaschine gezogenen Pflanzenschutzmittel-Sprühvorrichtung abhängt, kann auf diese Weise erreicht werden, daß automatisch eine pro Flächeneinheit konstante Menge an Lösung mit gleichbleibender Konzentration versprüht wird. In diesem Fall ist es somit nicht mehr erforderlich, die beim Versprühen von Pflanzenschutzmittel-Lösungen üblicherweise angestrebte Fahrgeschwindigkeit von 8 km/h exakt einzuhalten.

Das Befüllen des Wirkstoffbehälters 4 mit dem flüssigen Wirkstoff erfolgt aus dem Vorratstank 5 über den Tankschlauch 5a und die Einfüllschleuse 4a im drucklosen Zustand des Wirkstoffbehälters. Dazu wird nach Entfernen des Verschlußdeckels der am Vorratstank 5 befestigte Tankschlauch 5a an der Einfüllschleuse 4a angebracht und dann der flüssige Wirkstoff aus dem Vorratstank 5 in den Wirkstoffbehälter umgefüllt.

Falls sich nach Beendigung der Herstellung von Lösung noch flüssiger Wirkstoff im Wirkstoffbehälter befindet, kann diese Restmenge über den Entleerungsstutzen 7a und den Tankschlauch 5a in den Vorratstank 5 abgelassen werden. Dazu wird der am Vorratstank 5 befestigte Tankschlauch 5a am Entleerungsstutzen 7a befestigt, und nach Öffnen des Absperrhahns 6 läuft der flüssige Wirkstoff in den Vorratstank 5 ab.

Sowohl beim Befüllen als auch beim Entleeren des Wirkstoffbehälters ist auf diese Weise gewährleistet, daß die Bedienungsperson nicht in Berührung mit dem flüssigen Wirkstoff kommt und auch ein Verschütten des flüssigen Wirkstoffs verhindert wird.

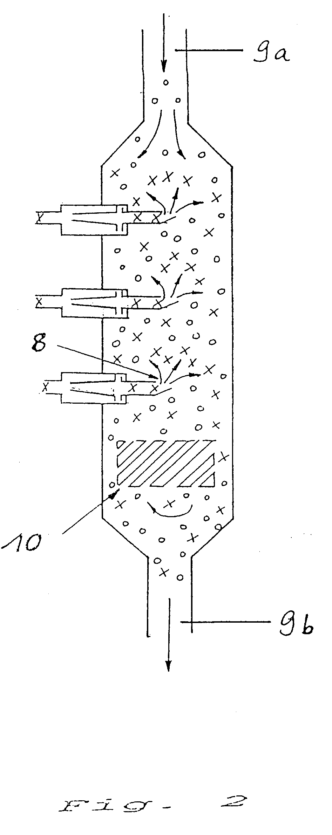

In Fig. 2 ist ein modifizierter Mischbehälter gezeigt, der sich von dem in Fig. 1 gezeigten Mischbehälter 9 dadurch unterscheidet, daß er mehrere bezüglich der Strömungsrichtung das Wassers im Mischbehälter gegeneinander versetzt angeordnete Winkeldüsen 8 aufweist. Jede dieser Düsen kann, wie die in Fig. 1 gezeigte Winkeldüse 8, mit jeweils einer vorstehend beschriebenen Vorrichtung zum Fördern eines flüssigen Wirkstoffs in den Mischbehälter verbunden werden und somit ist es auf einfache Weise durch Zu- oder Abschalten der Zufuhr einzelner flüssiger Wirkstoffe zum Mischbehälter möglich, Lösungen aus mehr als zwei Flüssigkeiten oder aufeianderfolgend unterschiedlich zusammengesetzte Lösungen herzustellen.

## Patentansprüche

1. Fahrbare Vorrichtung zum Herstellen einer insbesondere zum Versprühen bestimmten, aus Wasser und mindestens einem flüssigen Wirkstoff (X) bestehenden Lösung mit einem Mischbehälter (9), der zur Zufuhr des Wassers mit einem Wasserbehälter verbunden ist, zur Zufuhr des mindestens einen flüssigen Wirkstoffs mit mindestens einem Wirkstoffbehälter (4) verbunden ist und zum Abgeben der im Mischbehälter aus dem Wasser und dem mindestens einen flüssigen Wirkstoff gebildeten Lösung mit einer Abgabeöffnung versehen ist, wobei der Wirkstoffbehälter (4) zum Fördern des flüssigen Wirkstoffs (X) zum Mischbehälter (9) mit Hilfe von Druckluft als Druckbehälter ausgeführt ist, der mit konstantem Druck beaufschlagt ist,
gekennzeichnet durch einen zwischen dem Wirkstoffbehälter (4) und dem Mischbehälter (9) angeordneten Durchflußmengen-Messer (12) zum Erfassen der pro Zeiteinheit aus dem Wirkstoffbehälter zum Mischbehälter beförderten Menge an flüssigem Wirkstoff (X) und eine Regeleinrichtung, die die durch den Durchflußmengen-Messer (12) erfaßte Durchflußmenge auswertet und ein Durchflußmengen-Steuerventil (11) derart ansteuert, daß die dem Mischbehälter (9) zugeführte Menge an flüssigem Wirkstoff (X) einer vorgegebenen, an der Regeleinrichtung einstellbaren Menge entspricht.

2. Vorrichtung nach Anspruch 1, **dadurch gekennzeichnet**, daß die Regeleinrichtung so ausgebildet ist, daß die Menge an dem Mischbehälter (9) zuzuführendem flüssigem Wirkstoff (X) entsprechend der sich mit der Fahrgeschwindigkeit der fahrbaren Vorrichtung ändernden Menge an dem Mischbehälter (9) zugeführtem Wasser im Sinne einer gleichbleibenden Konzentration der Lösung festgelegt wird.

3. Vorrichtung nach einem der vorhergehenden Ansprüche, **dadurch gekennzeichnet**, daß die Druckluftzuleitung (1) an ihrem in das Innere des Wirkstoffbehälters (4) ragenden Ende eine Düse (1a) zum Aufmischen des flüssigen Wirkstoffs (X) durch die in den Wirkstoffbehälter (4) geleitete Druckluft aufweist.

4. Vorrichtung nach einem der vorhergehenden Ansprüche, **dadurch gekennzeichnet**, daß der Mischbehälter (9) zur Zufuhr des flüssigen Wirkstoffs (X) eine Winkeldüse (8) aufweist, durch die der unter Druck stehende flüssige Wirkstoff in den Mischbehälter (9) gleichmäßig verteilt eingebracht wird.

5. Vorrichtung nach einem der vorhergehenden Ansprüche, **dadurch gekennzeichnet**, daß der Mischbehälter (9) einen mit Abstand zur Mischbehälterwand angeordneten zylinderförmigen Staukörper (10) mit Schrägschlitzen an seiner Außenwand aufweist, so daß das Gemisch aus dem Wasser (O) und dem flüssigen Wirkstoff (X) beim Vorbeiströmen in eine eine gleichmäßige Vermischung bewirkende Drehbewegung versetzt wird.

6. Vorrichtung nach einem der vorhergehenden Ansprüche, **dadurch gekennzeichnet**, daß der Mischbehälter (9) eine Vielzahl von Winkeldüsen (8) zur Zufuhr einer Vielzahl von flüssigen Wirkstoffen aufweist, so daß eine aus dem Wasser und einer Vielzahl von flüssigen Wirkstoffen bestehende Lösung herstellbar ist oder aufeinanderfolgend verschiedene aus Wasser und mindestens einem flüssigen Wirkstoff bestehende Lösungen herstellbar sind.

7. Vorrichtung nach Anspruch 6, **dadurch gekennzeichnet**, daß die Winkeldüsen (8) bezüglich der Strömungsrichtung des Wassers (O) im Mischbehälter gegeneinander versetzt sind.

8. Vorrichtung nach einem der vorhergehenden Ansprüche, **dadurch gekennzeichnet**, daß der Wirkstoffbehälter (4) zum Befüllen mit flüssigem Wirkstoff (X) mit einer Einfüllschleuse (4a) versehen ist, an der ein mit einem Vorratstank (5) verbundener Tankschlauch (5a) derart befestigbar ist, daß beim Einfüllen des flüssigen Wirkstoffs (X) aus dem Vorratstank (5) in den Wirkstoffbehälter (4) eine Bedienungsperson mit dem flüssigen Wirkstoff nicht in Berührung kommt und ein Verschütten des flüssigen Wirkstoffs verhindert wird.

9. Vorrichtung nach einem der vorhergehenden Ansprüche, **dadurch gekennzeichnet**, daß zum Ablassen von Restmengen an flüssigem Wirkstoff (X) aus dem Wirkstoffbehälter (4) an einer Wirkstoffleitung (7) zwischen dem Wirkstoffbehälter (4) und dem Mischbehälter (9) in der Nähe des Wirkstoffbehälters (4) ein Entleerungsstutzen (7a) mit einem Absperrhahn (6) vorgesehen ist, und daß an dem Entleerungsstutzen (7a) ein mit einem Vorratstank (5) verbundener Tankschlauch (5a) derart befestigbar ist, daß beim Ablassen des flüssigen Wirkstoffs aus dem Wirkstoffbehälter (4) in den Vorratstank (5) eine Bedienungsperson mit dem flüssigen Wirkstoff nicht in Berührung kommt und ein Verschütten des flüssigen Wirkstoffs verhindert wird.

10. Vorrichtung nach Anspruch 1, **dadurch gekennzeichnet**, daß der Durchflußmengenmesser (12) ein Flügelrad aufweist, das durch die vorbeiströmende Menge an flüssigem Wirkstoff (X) in eine Drehbewegung versetzt wird.

11. Vorrichtung nach Anspruch 10, **dadurch gekennzeichnet**, daß das Flügelrad des Durchflußmengenmessers (12) entsprechend seiner Drehgeschwindigkeit als Maß für die Durchflußmenge Magnetimpulse erzeugt.

12. Vorrichtung nach einem der Ansprüche 1, 10 oder 11, **dadurch gekennzeichnet**, daß der Durchflußmengenmesser (12) eine die erfaßte Durchflußmenge anzeigende Anzeigeeinrichtung (12a) aufweist.

## Claims

1. Mobile apparatus for producing a solution which is intended in particular for spraying and consists of water and at least one liquid active substance (X), with a mixing vessel (9) which is connected to a water tank for the supply of water, is connected to at least one active substance container (4) for the supply of at least one liquid active substance and is provided with a discharge opening for discharging the solution formed in the mixing vessel from the water and at least one liquid active substance, wherein the active substance container (4) is constructed as a pressurised container under constant pressure for conveying the liquid active substance (X) to the mixing vessel (9) with the aid of compressed air, characterised by a flow meter (12) disposed between the active substance container (4) and the mixing vessel (9) for determining the quantity of liquid active substance (X) conveyed per unit of time from the active substance container to the mixing vessel, and a regulator which evaluates the flow quantity determined by the flow meter (12) and controls a flow control valve (11) in such a way that the quantity of liquid active substance (X) delivered to the mixing vessel (9) corresponds to a predetermined quantity which can be set at the regulator.

2. Device as claimed in Claim 1, characterised in that the regulator is constructed so that the quantity of liquid active substance (X) to be delivered to the mixing vessel (9) is fixed according to the quantity of water delivered to the mixing vessel (9) which varies with the speed of travel of the mobile apparatus with a view to a constant concentration of the solution.

3. Apparatus as claimed in one of the preceding claims, characterised in that the compressed air supply line (1) has at its end which protrudes into the interior of the active substance container (4) a nozzle (1a) for mixing up the liquid active substance (X) by means of the compressed air passed into the container (4) for the active substance.

4. Apparatus as claimed in one of the preceding claims, characterised in that for the supply of the liquid active substance (X) the mixing vessel (9) has an angular nozzle (8) by means of which the pressured liquid active substance is introduced in uniform distribution into the mixing vessel (9).

5. Apparatus as claimed in one of the preceding Claims, characterised in that the mixing vessel (9) has a cylindrical baffle body (10) disposed with a clearance from the wall of the mixing vessel and having inclined slots on its outer wall so that as the mixture of the water (O) and the liquid active substance (X) streams past it is set in rotary motion causing a uniform intermixing.

6. Apparatus as claimed in one of the preceding claims, characterised in that the mixing vessel (9) has a plurality of angular nozzles (8) for supplying a plurality of liquid active substances so that a solution consisting of the water and a plurality of liquid active substances can be produced or different solutions consisting of water and at least one liquid active substance can be produced in succession.

7. Apparatus as claimed in Claim 6, characterised in that the angular nozzles (8) are offset with respect to one another as regards the direction of flow of the water (O) in the mixing vessel.

8. Apparatus as claimed in one of the preceding claims, characterised in that for filling with liquid active substance (X) the active substance container (4) is provided with a filling valve (4a) on which a tank hose (5a) connected to a storage tank (5) can be fixed in such a way that during filling of the liquid active substance (X) from the storage tank (5) into the active substance container (4) an operator does not come into contact with the liquid active substance and spilling of the liquid active substance is prevented.

9. Apparatus as claimed in one of the preceding claims, characterised in that for draining residual quantities of liquid active substance (X) out of the container (4) for the active substance a drainage connection (7a) with a stopcock (6) is provided on an active substance line (7) between the active substance container (4) and the mixing vessel (9) in the vicinity of the active substance container (4), and that a tank hose (5a) connected to a storage tank (5) can be fixed on the drainage connection (7a) in such a way that during draining of the liquid active substance out of the mixing vessel (4) into the storage tank (5) an operator does not come into contact with the liquid active substance and spilling of the liquid active substance is prevented.

10. Apparatus according to Claim 1, characterised in that the flow meter (12) has a fan wheel which is set in rotary motion by the quantity of liquid active substance (X) streaming past.

11. Apparatus as claimed in Claim 10, characterised in that the fan wheel of the flow meter (12) produces magnetic pulses corresponding to its rate of rotation as a measure of the flow quantity.

12. Apparatus as claimed in one of Claims 1, 10 or 11, characterised in that the flow meter (12) has an indicator device (12a) which indicates the flow quantity which has been determined.

## Revendications

1. Dispositif mobile pour la production d'une solution destinée en particulier à être pulvérisée et se composant d'eau et d'au moins un agent actif liquide (X), comprenant une cuve de mélange (9) qui est reliée à un réservoir d'eau pour l'admission d'eau, qui est reliée à au moins un réservoir d'agent actif (4) pour l'admission d'eau moins un agent actif liquide et qui comporte un orifice de distribution pour la distribution de la solution formée dans la cuve de mélange à l'aide d'eau et de l'au moins un agent actif liquide, le réservoir d'agent actif (4) étant réalisé sous forme de récipient sous pression qui est mis sous une pression constante pour le refoulement de l'agent actif liquide (X) vers la cuve de mélange (9) à l'aide d'air comprimé, caractérisé par un débitmètre (12) disposé entre le réservoir d'agent actif (4) et la cuve de mélange (9) et destiné à détecter la quantité d'agent actif liquide (X) transportée par unité de temps du réservoir d'agent actif vers la cuve de mélange et par un dispositif de réglage qui dépouille le débit détecté par le débitmètre (12) et attaque une vanne (11) de commande du débit de manière que la quantité d'agent actif liquide (X) envoyée dans la cuve de mélange (9) corresponde à une quantité prescrite que peut régler le dispositif de réglage.

2. Dispositif selon la revendication 1, caractérisé en ce que le dispositif de réglage est réalisé de manière que la quantité d'agent actif liquide (X) devant être dirigé dans la cuve de mélange (9) soit déterminée en fonction de la quantité d'eau dirigée dans la cuve de mélange (9) et variant avec la vitesse de marche du dispositif mobile dans le sens d'une concentration constante de la solution.

3. Dispositif selon l'une des revendications précédentes, caractérisé en ce que le conduit d'arrivée d'air comprimé (1) comporte à l'extrémité pénétrant à l'intérieur du réservoir d'agent actif (4) un ajutage (1a) destiné à provoquer le mélange de l'agent actif liquide (X) par l'air comprimé dirigé dans le réservoir d'agent actif (4).

4. Dispositif selon l'une des revendications précédentes, caractérisé en ce que la cuve de mélange (9) comporte pour l'admission de l'agent actif liquide (X) une buse en éventail (8) qui introduit l'agent actif liquide sous pression dans la cuve de mélange (9) en le distribuant régulièrement.

5. Dispositif selon l'une des revendications précédentes, caractérisé en ce que la cuve de mélange (9) est équipée d'un corps cylindrique (10) formant chicane, disposé à distance de la paroi de la cuve de mélange et comportant sur sa paroi extérieure des fentes obliques qui font subir au mélange d'eau (O) et d'agent actif liquide (X) qui le balaye un mouvement de rotation qui en provoque un mélange uniforme.

6. Dispositif selon l'une des revendications précédentes, caractérisé en ce que la cuve de mélange (9) comprend plusieurs ajutages en éventail (8) d'admission de plusieurs agents actifs liquides, de manière qu'il soit possible de réaliser une solution se composant d'eau et de plusieurs agents actifs liquides ou de réaliser successivement différentes solutions se composant d'eau et d'au moins un agent actif liquide.

7. Dispositif selon la revendication 6, caractérisé en ce que les ajutages en éventail (8) sont décalés les uns par rapport aux autres dans la cuve de mélange par rapport au sens d'écoulement de l'eau (O).

8. Dispositif selon l'une des revendications précédentes, caractérisé en ce que le réservoir d'agent actif (4) comporte pour son remplissage par de l'agent actif liquide (X) un sas de remplissage (4a) auquel peut se fixer un flexible (5a) raccordé à un réservoir principal (5) de manière que lors du déversement de l'agent actif liquide (X) du réservoir principal (5) dans le réservoir d'agent actif (4), une personne de service n'entre pas en contact avec l'agent actif liquide et de manière à empêcher que l'agent actif liquide se répande.

9. Dispositif selon l'une des revendications précédentes, caractérisé en ce que, pour vider les quantités résiduelles d'agent actif liquide (X) du réservoir (4) d'agent actif liquide, une tubulure de vidage (7a) équipée d'un robinet d'arrêt (6) est prévue sur un conduit (7) d'agent actif, entre le réservoir d'agent actif (4) et la cuve de mélange (9), à proximité du réservoir d'agent actif (4) et en ce qu'un flexible (5a) raccordé au réservoir principal (5) peut se fixer à la tubulure de vidage (7a) de manière que, lorsque de l'agent actif liquide est vidé du réservoir (4) d'agent actif pour être renvoyé dans le réservoir principal (5), une personne de service n'entre pas en contact avec l'agent actif liquide et de manière à empêcher que de l'agent actif liquide se répande.

10. Dispositif selon la revendication 1, caractérisé en ce que le débitmètre (12) comporte une roue à ailettes à laquelle la quantité d'agent actif liquide (X) qui la balaye impose un mouvement de rotation.

11. Dispositif selon la revendication 10, caractérisé en ce que la roue à ailettes du débitmètre (12) génère en fonction de sa vitesse de rotation des impulsions magnétiques qui constituent une mesure du débit.

12. Dispositif selon l'une des revendications 1, 10 ou 11, caractérisé en ce que le débitmètre (12) comporte un dispositif d'affichage (12a) qui indique le débit détecté.
